# EUROPÄISCHE PATENTSCHRIFT

(11) **EP 1 108 153 B1**
(45) Veröffentlichungstag und Bekanntmachung des Hinweises auf die Patenterteilung: **02.07.2003**
(21) Anmeldenummer: 99944519.0
(22) Anmeldetag: 26.08.1999
(51) Int. Cl.: F16D 65/06, F16D 65/092

(54) **ELASTISCHER BREMSENKÖRPER**
ELASTIC BRAKING BODY
CORPS DE FREINAGE ELASTIQUE

(30) Priorität: 03.09.1998 DE 19840065
(43) Veröffentlichungstag der Anmeldung: 20.06.2001
(73) Patentinhaber: KNORR-BREMSE Systeme für Schienenfahrzeuge GmbH, 80809 München (DE)
(72) Erfinder: WIRTH, Xaver, D-85737 Ismaning (DE)
(74) Vertreter: Mattusch, Gundula
(86) Internationale Anmeldenummer: EP9906261
(87) Internationale Veröffentlichungsnummer: WO00014422

(56) Entgegenhaltungen:
- CH-A- 118 284
- DE-A- 4 301 006
- DE-A- 4 436 457
- FR-A- 1 064 633
- FR-A- 2 689 195
- FR-A- 2 733 290
- FR-A- 2 734 875
- GB-A- 1 089 955
- US-A- 3 473 631
- US-A- 4 501 347

## Beschreibung

Die Erfindung betrifft einen Bremsenkörper, der als Bremsklotz oder Scheibenbremsbelag ausgeführt ist, umfassend einen Tragkörper mit mehreren Ausnehmungen sowie in den Ausnehmungen angeordneten Reibwerkstoffelementen gemäß dem Oberbegriff des Anspruches 1.

Insbesondere bei Schienenfahrzeugen gibt es zwei große Klassen von Reibungsbremsen. Zum einen sind dies die sogenannten Klotzbremsen, zum anderen die Scheibenbremsen.

Die Klotzbremse ist eine kostengünstig aufgebaute Reibungsbremse für Schienenfahrzeuge, da bei einer derartigen Bremseinrichtung nur eine Zuspannvorrichtung notwendig ist, mit deren Hilfe ein Bremsklotz auf die Lauffläche des Schienenrades gepreßt wird. Bezüglich der Ausbildung von Klotzbremsen wird auf "Bremsen für Schienenfahrzeuge, Handbuch - Bremstechnische Begriffe und Werte, Knorr-Bremse AG München, 1990", S. 22 - 23 sowie S. 41 verwiesen.

Nachteilig an der Klotzbremse gemäß dem Stand der Technik sind inbesondere die hohe Beanspruchung der Radlauffläche, die die Radlebensdauer verkürzt sowie Aufrauhungen derselben und Riffelbildung. Insbesondere letztgenannte Effekte führen zu einem hohen Laufgeräusch beim Abrollvorgang des Rades. Diese Nachteile der Klotzbremse haben die Entwicklung und den Einsatz der Scheibenbremse in modernen Reisezugwagen begünstigt.

Bei einer Scheibenbremse sind Bremsscheiben beiderseits des Radkörpers angebracht. Die Bremsbeläge wirken auf die Bremsscheibe. Aufgrund der Reibungskraft wird das zugehörige Rad abgebremst.

Betreffend der Ausbildung von Scheibenbremsen gemäß dem Stand der Technik wird auf "Bremsen für Schienenfahrzeuge, Handbuch - Bremstechnische Begriffe und Werte, Knorr-Bremse AG München", S. 50 verwiesen.

Bremsklötze mit Ausnehmungen sind aus einer Vielzahl von Veröffentlichungen bekanntgeworden. So zeigt die DE-C-277902 einen Bremsklotz mit Ausnehmungen, in die ein Filzmaterial eingebracht ist. Das Fitzmaterial ragt über dem Tragkörper hinaus, so daß mit dem Tragkörper keine gemeinsame Reibfläche ausgebildet wird.

Der aus der DE-U-29500977 bekannte Bremsklotz umfaßt Bohrungen, die Stopfen aus Reibmaterial aufnehmen, diese sind jedoch nur mit einer Schraube am Trägerkörper befestigt. Eine elastische oder wippende Lagerung der einzelnen Reibwerkstoffblöcke ist aus der DE-U-29500977 nicht bekanntgeworden.

In den Dokumenten FR-A-2689195 und GB-A1089955 sind einzelne Bremsenkörper mit einer Ausnehmung und einem beweglich darin angeordneten Reibwerkstoffelement bekanntgeworden. Diese stellen jedoch keine Bremsklötze oder Bremsbeläge mit mehreren Ausnehmungen dar.

Die aus der DE-A-4301006, DE-A-4436457 und DE-U-9307017 bekannten Bremsbeläge umfassen elastisch oder wippend gelagerte Reibwerkstoffblöcke; allerdings sind diese direkt am Trägerkörper angeordnet und bilden insbesondere mit dem Trägerkörper keine zusammenhängende Reibwerkstoffläche aus.

Sowohl bei Klotzbremsen als auch bei Scheibenbremsen besteht ein generelles Problem in der Kontaktpressung zwischen Bremsenkörper, d.h. Bremsklotz und Rad bzw. Bremsbelag und Bremsscheibe.

Aufgrund von Wärmebedingungen des Bremsenkörpers bzw. Rades oder der Scheibe, sowie des Verschleißes derselben, liegt der tatsächliche Bremswert oben genannter Reibungsbremsen stets wesentlich niedriger als der gemäß den Materialkonstanten theoretisch Mögliche.

Bei Klotzbremsen kommt noch hinzu, daß die Radlauffläche aus lauftechnischen Gründen eine nicht abwickelbare Fläche ausbildet. Der Bremsklotz liegt daher oftmals auf der Radlaufläche nur punktuell auf bzw. bildet einen linienförmigen Kontakt. Die Klotzbremse wird aufgrund dieses Kontaktes stark überbeansprucht.

Ein weiteres Problem der zuvor beschriebenen Bremssysteme ist das Tragbild, das beispielsweise aufgrund von Wärmedehnungen und Achsverschiebungen nur unzureichend ist. Generell gilt, daß das Tragbild umso schlechter ist, je härter das Material ist. Das schlechte Tragbild führt zur Riffelbildung oder zu Ausbröckelungen in den Radlaufflächen und infolgedessen zu einer hohen Geräuschentwicklung beim Bremsen.

Aufgabe der Erfindung ist es somit, einen Bremskörper, der für Klotzbremsen oder Scheibenbremsen ausgeführt ist, zu schaffen, mit dem die hier zuvor genannten Nachteile überwunden werden können.

Erfindungsgemäß wird dies dadurch erreicht, daß die in Längsrichtung der Ausnehmungen beweglich gelagerten Reibwerkstoffblöcke, deren Lagerung elastisch oder wippend ausgestaltet ist, mit dem Tragkörper eine Reibfläche ausbilden.

Durch die bewegliche Ausgestaltung der Reibwerkstoffelemente wird die Flächenpressung des erfindungsgemäßen Bremsenkörpers entscheidend verbessert.

Ein weiterer Vorteil des Bremsklotzes gemäß Anspruch 1 ist darin zu sehen, daß bei ungleichmäßiger Abnutzung des Radreifens oder bei Achsverschiebung sich die einzelnen Reibwerkstoffblöcke in Richtung der Ausnehmungen verschieben können und sich so der Lauffläche des Rades anpassen. Die elastische oder wippende Aufhängung gewährleistet trotz dieser Verschiebung eine im wesentlichen stets gleiche Flächenpressung Insbesondere wird die stets gleiche Flächenpressung unabhängig von der Achslage bzw. Abnutzung sichergestellt.

In unterschiedlichen Ausgestaltungen der Erfindung sind die Ausnehmungen mit den Reibwerkstoffefementen entweder in Reihe oder versetzt zueinander angeordnet.

Besonders bevorzugt ist eine Ausgestaltung der Erfindung. bei der die Reibfläche der Reibwerkstoffelemente an der gesamten Reibfläche des Bremsenkörpers einen Anteil von mindestens 30 %, vorzugsweise 50 bis 80 % aufweist.

Die elastische Lagerung der Reibwerkstoffelemente mit Hilfe von elastisch deformierbaren Körpern, beispielsweise Federelementen. bietet eine Reihe weiterer Vorteile bei unterschiedlichen Bremsvorgängen, wie nachfolgend beschrieben wird.

Liegt eine konstante Bremsung mit hoher Zuspannkraft vor. so federn die elastisch gelagerten Reibwerkstoffelemente nach hinreichend langer Bremszeit so weit ein, bis die Summe der elastischen Kräfte in etwa der Zuspannkraft des Bremsklotzes bzw. des Bremsbelags entspricht.

Nach Auftreten einer Tragbildänderung, z.B. durch axiales Verschieben des Rades oder durch eine thermische Ausbeulung. erfolgt ein Einfedern oder Ausfedern der elastisch gelagerten Reibwerkstoffelemente entsprechend ihrer Federkennlinie, während jede Radbeule den Tragkörper stärker verschleißt als das benachbarte Reibwerkstoffeiement. Das zwischen zwei Ausbeulungen liegende Tal auf der Radfläche entlastet den Kontaktbereich des Tragkörpers. während die Reibwerkstoffelemente federbelastet ausfahren und eine gewisse Reibenergiezuführung somit auch im Talbereich sicherstellen. Auf diese Art und Weise wird der Entstehung von sogenannten Hot-Spots bei Klotzbremsen. aber auch bei Scheibenbremsen, begegnet.

Bei konstanten Bremsungen mit niedriger Flächenpressung stellt sich nach Lösen der Bremse ein Zustand des Bremsenkörpers ein. bei dem die Reibwerkstoffelemente gegenüber den Tragkörpern vorstehen, da sich die elastischen Elemente, beispielsweise Federelemente, entspannen.

Wird ausgehend von diesem Zustand leicht gebremst. so werden die Reibwerkstoffelemente nur gering in die Ausnehmung gedrückt und bleiben gegenüber der Reibfläche des Tragkörpers hervorstehend. Erst langes oder häufiges Bremsen mit geringer Anpreßkraft führt dazu, daß sich die Reibwerkstoffelemente abschleifen und flächenbündig mit dem Tragkörper eine Reibfläche ausbilden.

Bei kurzzeitigen Bremsungen sind zwei Alternativen denkbar:

Bei der ersten Alternative stehen zu Beginn der Bremsung die Reibwerkstoffelemente hervor. Auch für diesen Fall entsteht eine relativ gleichmäßige Flächenpressung und damit ein gleichmäßiger Energieeintrag auf das Rad bzw. die Bremsscheibe, die durch die elastisch eingebetteten Reibwerkstoffelemente bestimmt wird.

Alternativ hierzu können vor Beginn der Bremsung die Fläche des Tragkörpers und der Reibwerkstoffelemente nahezu bündig abschließen. In einem solchen Fall wirkt der Tragkörper wie ein weicher Bremsbelag, der sich durch seine Elastizität an die Radtopographie anpaßt. Ebenso verhalten sich die elastisch in den Ausnehmungen angeordneten Reibwerkstoffelemente.

Als elastische Elemente gelangen Federelemente zum Einsatz. Besonders ausgestaltete Federelemente sind Tellerfedern, Spiralfedern. Gummiringe oder Gummiplättchen.

Alternativ zu der Lagerung mittels elastischer Elemente können dieselben Effekte erzielt werden. wenn die bewegliche Lagerung der Reibwerkstoffblöcke Wippelemente umfaßt, die eine Bewegung der Reibwerkstoffelemente in Richtung der Längsachse der Ausnehmung aufgrund von Kippbewegungen des Wippelementes ermöglichen.

In einer weitergebildeten Ausführungsform können mehrere Wippelemente übereinander angeordnet sein. die untereinander ankoppeln und so ein übergeordnetes Wippelement ausbilden.

Um die Reibung zwischen den einzelnen Reibwerkstoffelementen und den Aufnahmeöffnungen im Tragkörper zu vermindern, ist mit Vorteil vorgesehen, daß zwischen der Innenwand der Aufnahmeöffnung und den Reibwerkstoffelementen Mittel zur Reibungsverminderung vorgesehen sind. Insbesondere eignen sich hierfür in die Ausnehmung eingelassene Hülsen aus Blech.

Die zuvor beschriebene ideale Anpassung des erfindungsgemäßen Bremsenkörpers an die Radlauffläche bzw. die Bremsscheibe wird dann erzielt, wenn der Tragkörper aus einem weicheren und verschleißfreudigerem Material als die einzelnen Reibwerkstoffelemente besteht.

Die Reibwerkstoffelemente hingegen werden bevorzugt aus einem temperaturbeständigen, verschleißfesten Material ausgebildet, um hohe Bremsleistungen erzielen zu können. Inbesondere sei hier auf die Verwendung von quarzgebundenen Hochtemperaturreibwerkstoffen bzw. Sinterwerkstoffen verwiesen, die aus Metallfeinstpulver. das beispielsweise Eisen. Kupfer und Buntmetalle umfaßt, hergestellt werden.

In einer ersten Weiterbildung der Erfindung sind die in einer Ausnehmung befindlichen Reibwerkstoffelemente zu einem einzelnen Reibwerkstoffblock zusammengefaßt. der insbesondere eine kreiszylindrische Form aufweisen kann. In diesem Zusammenhang sind Reibwerkstoffblöcke mit beispielsweise neun in einer Matrix angeordneten Einzelelementen verwendbar, die untereinander beispielsweise mit Klebstoff oder auf andere Art und Weise verbunden sein können.

Das zylinderförmige Reibwerkstoffelement kann bevorzugt in einer als kreisförmigen Bohrung ausgebildeten Aufnahme im Tragkörper aufgenommen werden.

Neben einer kreiszylindrischen Form der Reibwerkstoffelemente bzw. der Ausnehmungen sind auch andere Formen, beispielsweise mit n-eckigem oder ellipsenförmigem Querschnitt der einzelnen Reibwerkstoffelemente, verwendbar.

Bei größer ausgedehnten Reibwerkstoffelementen bzw. Reibwerkstoffblöcken ist als elastische Schicht mit Vorteil anstelle einzelner Federelemente eine Matte, beispielsweise aus einem kautschukelastischen Material. vorgesehen.

In einer ersten Verwendung ist der erfindungsgemäße Bremsenkörper als Bremsklotz in herkömmlichen Klotzbremseinheiten vorgesehen. Für eine derartige Anwendung ist es von Vorteil, wenn die Anbindung des erfindungsgemäßen Bremsenkörpers an den Bremsklotzschuh bzw. die Betätigungseinrichtung auf herkömmliche Art und Weise nach UIC-Norm erfolgt.

Alternativ zur Verwendung des erfindungsgemäßen Bremsenkörpers in einer Klotzbremseinheit ist die Verwendung in einer Scheibenbremse möglich. Auch hier werden ähnlich gute Ergebnisse wie beim Einsatz in Klotzbremsen erzielt. Insbesondere wird auch bei der Verwendung von harten. verschleißfesten Werkstoffen ein gutes Tragbild in den verschiedensten Betriebssituationen erzielt, insbesondere deswegen. weil sich die Belagfläche an die unebene Reibfläche der Bremsscheibe anpaßt, so daß das Entstehen von Hot-Spots verhindert wird. Außerdem wird eine hohe Geräuschdämpfung aufgrund der elastischen Lagerung erreicht.

Die Erfindung soll nunmehr anhand der Figuren beispielhaft beschrieben werden.

Es zeigen:
- Fig. 1A: eine Draufsicht auf die Reibfläche eines als Bremsklotz ausgebildeten, erfindungsgemäßen Bremsenkörpers;
- Fig. 1B: einen Schnitt entlang der Linie A-A des in Fig. 1A dargestellten Bremsklotzes;
- Fig. 1C: eine detaillierte Darstellung der in Fig. 1B dargestellten Ausnehmung mit darin befindlichem Reibwerkstoffelement;
- Fig. 2A: einen erfindungsgemäßen an einer ebenen Radlauffläche anliegenden Bremsenkörper;
- Fig. 2B: einen erfindungsgemäßen, an einer ebenen Radlauffläche anliegenden Bremsenkörper;
- Fig. 3A: eine zweiteilige Ausführungsform eines erfindungsgemäßen Bremsklotzes in Draufsicht;
- Fig. 3B: einen Schnitt entlang der Linie A-A des in Fig. 3A dargestellten Bremsklotzes;
- Fig. 4A: eine Draufsicht auf einen erfindungsgemäßen Bremsklotz mit elliptischen Ausnehmungen:
- Fig. 4B: eine Draufsicht auf einen erfindungsgemäßen Bremsklotz mit sechseckiger Ausnehmung;
- Fig. 5A: eine perspektivische Ansicht eines erfindungsgemäßen Bremsenkörpers mit zu Reibwerkstoffblöcken zusammengefaßten Reibwerkstoffelementen;
- Fig. 5B: einen Schnitt durch den Bremsenkörper gemäß Fig. 5A;
- Fig. 5C: eine detailliertere Darstellung eines alternativen Bremsenkörpers mit einem Reibwerkstoffblock:
- Fig. 5D: eine alternative Ausführungsform eines Bremsenkörpers gemäß Fig. 5A;
- Fig. 5E: eine weitere Ausführungsform eines erfindungsgemäßen Bremsenkörpers gemäß Fig. 5A:
- Fig. 6A: eine Draufsicht auf einen erfindungsgemäßen Bremsenkörper mit Wippelementen zur Bewegung der Reibwerkstoffelemente in Richtung der Längsachse der Ausnehmungen;
- Fig. 6B: eine Seitenansicht der Ausführungsform gemäß Fig. 6A im Schnitt;
- Fig. 6C: einen Bremsklotz mit einem Bremsenkörper gemäß der Ausführung nach Fig. 6A in perspektivischer Ansicht;
- Fig. 7A: eine Draufsicht auf einen Bremsenkörper zur Verwendung in Scheibenbremsen; und
- Fig. 7B: einen Schnitt durch den in Fig. 7A dargestellten Bremsenkörper.

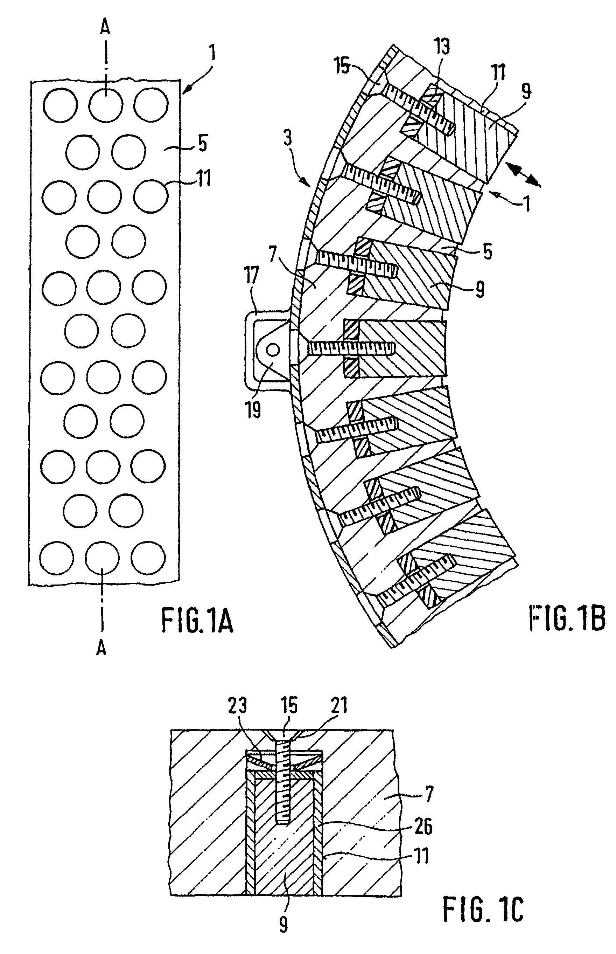

Fig. 1A zeigt in einer Draufsicht die gesamte Reibfläche 1 des erfindungsgemäßen Bremsenkörpers 3. Die gesamte Reibfläche 1 setzt sich aus der Reibfläche 5 des Tragkörpers 7 sowie den Reibwerkstoffelementen 9 zusammen, die in Ausnehmungen 11 des Tragkörpers 7 vorzugsweise elastisch gelagert sind. Die Ausnehmungen 11 im Tragkörper 7 weisen in der dargestellten Ausführungsform einen kreisförmigen Querschnitt auf. Vorzugsweise handelt es sich hierbei um in den Tragkörper eingelassene Blindbohrungen bzw. Sackbohrungen. Die Reibfläche der Reibwerkstoffelemente an der gesamten Reibfläche 1 des erfindungsgemäßen Bremsenkörpers 3 beträgt mindestens 30 %. vorzugsweise zwischen 50 und 80 %. In der in Fig. 1A dargestellten Ausführungsform sind die Ausnehmungen 11 für die Reibwerkstoffelemente 9 versetzt angeordnet. Alternativ können die Ausnehmungen in Reihe angeordnet werden (nicht dargestellt). Ein besonders gutes Tragbild des erfindungsgemäßen Bremsenkörpers 3 wird dann erzielt, wenn der Tragkörper 7 aus einem weicheren Material besteht als die Reibwerkstoffelemente 9.

In Fig. 1B ist ein Schnitt entlang der Linie A-A des erfindungsgemäßen Bremsenkörpers 3 gemäß Fig. 1A dargestellt. In dem Tragkörper 7 sind die Ausnehmungen 11 vorgesehen. die vorliegend als zylindrische Sackbohrungen senkrecht zur gesamten Reibfläche 1 des Bremsenkörpers 3 ausgebildet sind. In den Ausnehmungen 11 befindet sich erfindungsgemäß jeweils ein Reibwerkstoffelement 9, das ebenfalls eine zylindrische Form aufweist. Vorzugsweise bestehen die erfindungsgemäßen Reibwerkstoffelemente 9 aus einem harten, verschleißfesten Reibmaterial, beispielsweise einem Sintermaterial. Auf dem Grund einer jeden Ausnehmung 11 des Tragkörpers 7 ist ein elastisches Element 13 angeordnet, durch welches ein Befestigungsmittel 15 hindurchgreift. Das Befestigungsmittel 15 ist wiederum mit dem zylinderförmigen Reibwerkstoffelement 9 verbunden, wodurch dessen Unverlierbarkeit gewährleistet wird. Der Tragkörper 7 hat im wesentlichen die Form eines konventionellen Bremsklotzes, wie beispielsweise in "Bremsen für Schienenfahrzeuge. Handbuch - Bremstechnische Begriffe und Werte, Knorr-Bremse AG München" offenbart. Am Tragkörper 7 selbst ist eine Befestigungsvorrichtung 17 zur Halterung in einem Bremsklotzschuh (nicht dargestellt) gemäß UIC-Norm vorgesehen. Alternativ hierzu kann eine Anbindungsvorrichtung 19 an herkömmliche Betätigungsvorrichtungen von Klotzbremseinheiten (nicht dargestellt) gemäß UIC-Standard vorgesehen sein.

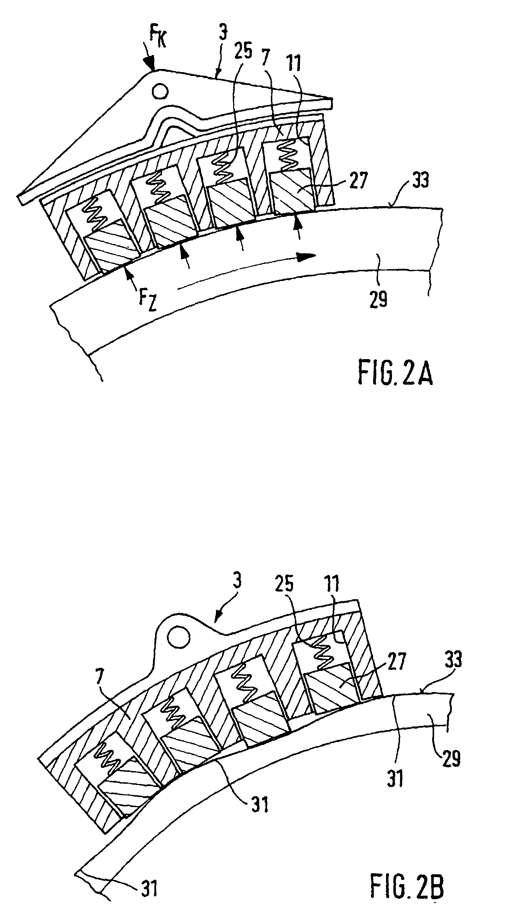

In Fig. 1C ist eine als Sackbohrung ausgebildete Ausnehmung 11 im Tragkörper 7 detaillierter dargestellt. Das zylinderförmige Reibwerkstoffelement 9 wird beispielsweise durch das als Schraube ausgebildete Befestigungsmittel 15 gehalten, wobei der Schraubenkopf in einer in dem Tragkörper 7 vorgesehenen Vertiefung 21 versenkt ist. Als elastisches Element 13 ist in der in Fig. 1C dargestellten Ausgestaltung eine Tellerfeder 23 vorgesehen. Alternativ oder kumulativ hierzu könnte eine Spiralfeder, ein Gummiring oder ein Gummiplättchen Verwendung finden. Für eine Verminderung der Reibung des teleskopförmig verschiebbaren Reibwerkstoffelementes 9 sorgt eine Hülse 26 zwischen Reibwerkstoffelement 9 und der Wand der Ausnehmung 11. Die Hülse 26 kann aus Blech hergestellt sein. Aus den Fig. 2A und 2B wird die Funktionsweise der Erfindung offensichtlich. In Fig. 2A ist beispielhaft für die erfindungsgemäße Vorrichtung eine konstante Bremsung mit hoher Zuspannkraft dargestellt.

Für den in Fig. 2A und 2B dargestellten erfindungsgemäßen Bremsenkörper 3 werden für gleiche Bauteile dieselben Bezugsziffern wie in Fig. 1A bis 1C verwandt. Der Bremsenkörper 3 umfaßt einen Tragkörper 7 sowie in den Ausnehmungen 11 mittels Federn 25 elastisch gelagerte Reibwerkstoffelemente 27. Da der Tragkörper 7 aus einem weicheren Material als die Reibwerkstoffelemente 27 gefertigt ist, verschleißt dieser schneller als die Reibwerkstoffelemente 27. Die Reibwerkstoffelemente 27 federn dann soweit ein, bis die Summe der von den Reibwerkstoffelementen 27 aufgenommenen Kräfte F_{Z} von der Lauffläche 33 des Rades 29 her in etwa der Zuspannkraft F_{K} des als Bremsklotz ausgestalteten Bremsenkörpers 3 entspricht.

Nach Auftreten einer Tragbildänderung, wie in Fig. 2B dargestellt, beispielsweise aufgrund von thermisch hervorgerufenen Beulen 31 in der Lauffläche 33 des Rades 29, erfolgt ein Ein- oder Ausfedern der Reibwerkstoffelemente 27 entsprechend der Kennlinie der Feder 25, während jede Radbeule 31 den Tragkörper 7 stärker verschleißt als das benachbarte zylinderförmige Reibwerkstoffelement 27.

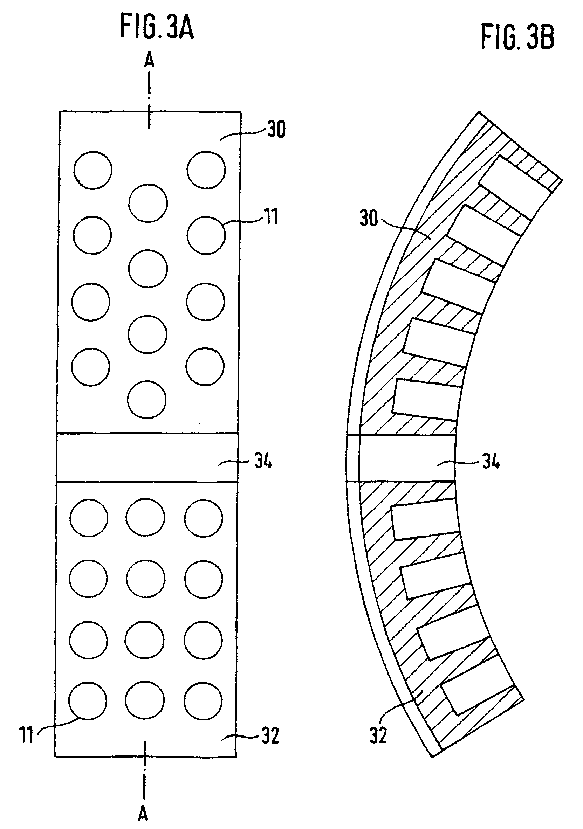

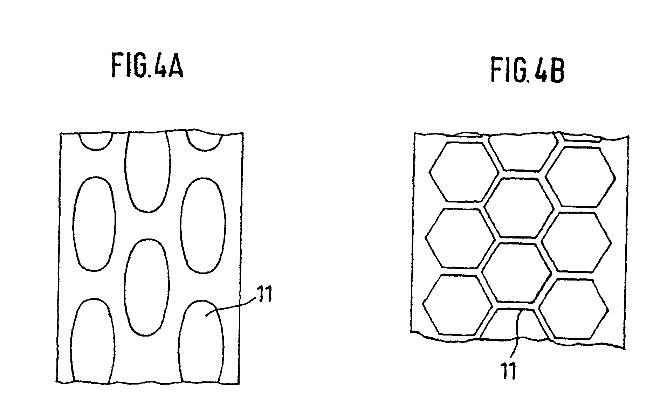

In den Fig. 3A und 3B ist eine zweiteilige Ausführungsform des erfindungsgemäßen Bremsenkörpers 3 dargestellt. Die zweiteilige Ausführungsform umfaßt zwei Abschnitte 30. 32. die durch einen Trennbereich 34 voneinander abgetrennt sind. Im Abschnitt 30 sind die Ausnehmungen 11 versetzt zueinander angeordnet, während die Ausnehmungen 11 im Abschnitt 32 in Reihe angeordnet sind. in den Fig. 4A und 4B sind weitere Ausgestaltungen von Ausnehmungen 11 mit anderen als zylinderförmigen Querschnitten dargestellt. In Fig. 4A weisen die Ausnehmungen elliptischen Querschnitt. in Fig. 4B einen n-eckigen. vorliegend sechseckigen Querschnitt auf.

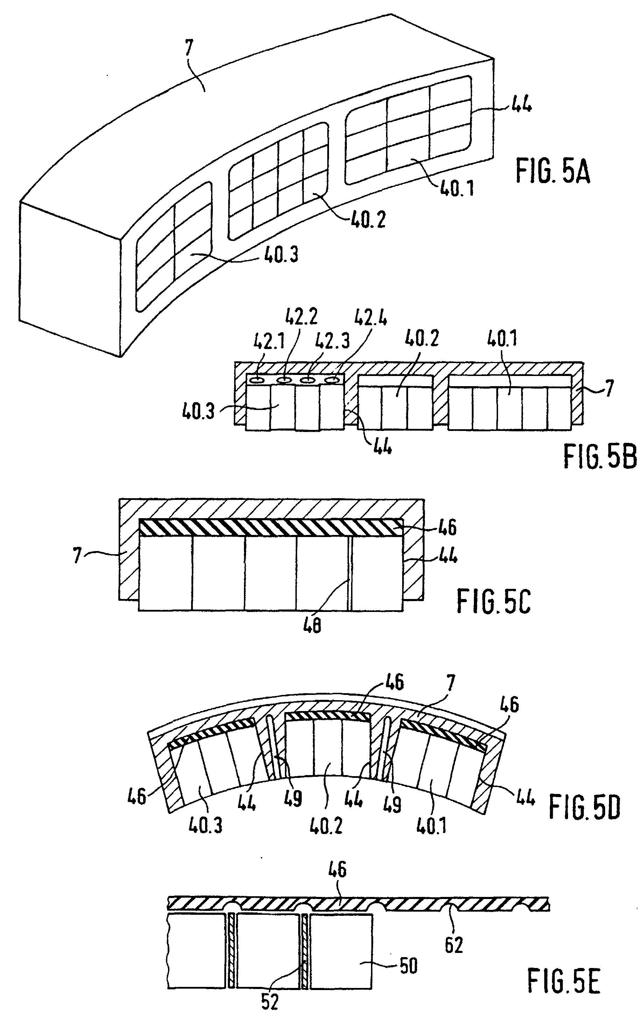

Während in den Ausführungsformen der Fig. 1 bis 4 jedes Reibwerkstoffelement 9, 27 einen einzelnen Reibwerkstoffblock ausbildet, sind in den Fig. 5A bis 5E Ausführungsformen der Erfindung dargestellt. bei denen eine Vielzahl von Reibwerkstoffelementen zu Reibwerkstoffblöcken 40.1, 40.2, 40.3 zusammengefaßt sind.

Fig. 5A ist eine perspektivische Darstellung einer derartigen Ausführungsform. In den Trägerkörper 7 sind Reibwerkstoffblöcke 40.1, 40.2, 40.3 eingelassen, die jeder für sich eine Vielzahl von einzelnen Reibwerkstoffelementen umfaßt.

In Fig. 5B ist ein Schnitt durch die Ausführung gemäß Fig. 5A dargestellt. Die einzelnen zu einem Reibwerkstoffblock 40.1, 40.2 und 40.3 verbundenen Reibwerkstoffelemente sind je einzeln elastisch in den Ausnehmungen 44 für den Reibwerkstoffblock angeordnet. Die elastische Lagerung jedes Reibwerkstoffblocks 40:1, 40.2. 40.3 erfolgt duch elastische Elemente 42.1, 42.2, 42.3, 42.4, die hier nur schematisch angedeutet sind.

Anstelle einzelner elastischer Elemente 42.1. 42.2, 42.3, 42.4 kann, wie in Fig. 5C dargestellt, eine durchgehende elastische Gummimatte 46 in der Aussparung 44 vorgesehen sein. Um den Reibwert zu vermindern, können die einzelnen Reibwerkstoffelemente mit Hülsen 48 als Ummantelung versehen werden. In Fig. 5D ist eine alternative Ausführungsform eines Bremsenkörpers 3 gemäß den Fig. 5A bis 5C dargestellt. Dieser zeichnet sich dadurch aus. daß zur Erhöhung der Flexibilität des Tragkörpers 7 zwischen den Ausnehmungen 44 für die einzelnen Reibwerkstoffblöcke 40.1, 40.2, 40.3 Schlitze 49 vorgesehen sind. Die elastische Aufhängung der einzelnen Reibwerkstoffblöcke 40.1. 40.2. 40.3 geschieht mit Hilfe von Gummimatten 46. Wie aus Fig. 5C und Fig. 5D ersichtlich ist, können die Reibwerkstoffelemente 9, 27, 50 und/oder Reibwerkstoffblöcke 40.1, 40.2, 40.3 auf der der Laufläche 33 eines Rades 29 zugewandten Seite bündig mit dem Tragkörper abschließen oder über diesen hinausragen.

Die Gummimatten 46 können, wie in Fig. 5E dargestellt. mit Ausnehmungen 62 versehen sein. Zur Reibwertminderung können zwischen den einzelnen Reibwerkstoffelementen 50 eines Reibwerkstoffblockes 40.1, 40.2, 40.3 Blechträger 52 vorgesehen sein.

Neben der zuvor dargestellten Möglichkeit einer elastischen Aufhängung der Reibwerkstoffelemente 9. 27, 50 und/oder Reibwerkstoffblöcke 40.1, 40.2, 40.3 mittels Federelementen, ist in einer abgewandelten Ausgestaltung der Erfindung vorgesehen, eine Beweglichkeit in Richtung der Längsachse 60 der einzelnen Ausnehmungen 62 mit Hilfe eines sogenannten Wippelementes 64 zu ermöglichen. Das Wippelement 64 ist in vorliegender Ausführungsform als Dreibeinwippe ausgebildet. Wiederum drei der Wippelemente 64 können von einem übergeordneten Wippelement 66 umfaßt werden. Die Wippelemente 64, 66 ermöglichen durch Verkippen eine Bewegung in Richtung der Längsachse 60 und damit eine analoge Bewegung zu der der elastisch aufgehängten einzelnen Reibwerkstoffelemente 68.

In den einzelnen Ausnehmungen 62 sind die Reibwerkstoffelemente 68 beispielsweise durch nicht dargestellte Vorsprünge gegen Herausfallen gesichert.

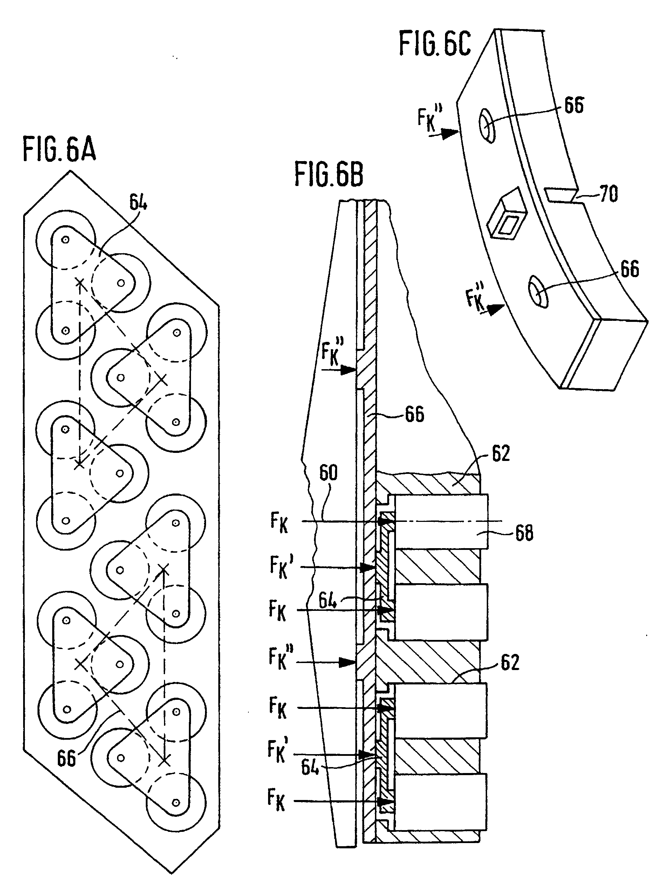

Fig. 6B ist eine Schnittansicht der Ausführungsform gemäß Fig. 6A, und Fig. 6C eine perspektivische Ansicht derselben. Insgesamt umfaßt der Bremsklotz gemäß Fig. 6C zwei übergeordnete Dreibeinwippen 66, denen wiederum drei Dreibeinwippen 64 mit je drei Reibwerkstoffelementen 68 zugeordnet sind. Der Bereich jeder übergeordneten Dreibeinwippe 66 wird durch einen Schlitz 70 vom anderen Bereich getrennt. Die Verteilung der einzelnen Zuspannkräfte F_{K}, F_{K}', F_{K}" ist in der Fig. 6B und Fig. 6C angedeutet.

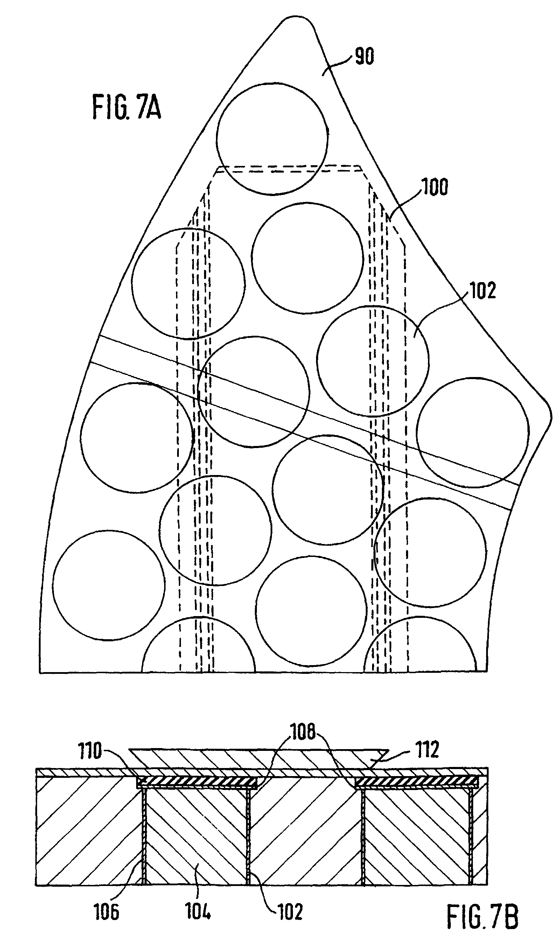

In Fig. 7A und 7B ist eine Ausführungsform des erfindungsgemäßen Bremsenkörpers 3 als Scheibenbelag 90 dargestellt. Der Scheibenbelag 90 umfaßt einen Tragkörper 100, der vorzugsweise Scheibenform aufweist, mit darin eingelassenen Ausnehmungen 102. Wie in Fig. 7B im Schnitt dargestellt. sind in den einzelnen Ausnehmungen 102 Reibwerkstoffelemente 104 vorgesehen. Zur Reibungsminderung ist zwischen einem Reibwerkstoffelement 104 und einer als Bohrung ausgeführten Ausnehmung 102 beispielsweise eine Hülse 106 aus Blech vorgesehen. Zylindrische Reibwerkstoffelemente 104 werden durch Plättchen 108, mit denen sie fest verbunden sind, am Herausfallen aus den Ausnehmungen 102 gehindert. Als elastische Federelemente 110 finden wiederum Gummielemente Verwendung. Der Trägerkörper 100 ist vorliegend als Trägerplatte ausgebildet, die eine Schwalbenschwanzführung 112 zur leichten Befestigung und Tauschbarkeit am Bremsenträger (nicht dargestellt) umfaßt. Die Ausnehmungen 102 sind in der dargestellten Ausführungsform als zylindrische Aussenkungen in dem plattenförmigen Tragkörper 100 ausgestaltet. Der Anteil der zylindrischen Reibwerkstoffelemente 102 liegt in vorliegendem Ausführungsbeispiel bei mindestens 50% der gesamten Reibfläche des Bremsbelages. Die Hülse 106 zur Reibwertverminderung weist vorliegend eine Wandstärke von weniger als 1 mm auf. In geschlitzter Ausführung der Hülse 106 lassen sich Toleranzen einfach einhalten. Eine unter Vorspannung montierte Hülse 106 ermöglicht eine einfache Montage des Bremsenkörpers 3. Neben einer Verminderung der Reibung zwischen zylindrischem Reibwerkstoffkörper 104 und Tragkörper 100 dienen die Hülsen 106 auch noch der Wasserabweisung bei nässebeaufschlagten Bremsscheiben.

Mit dem erfindungsgemäßen Bremsenkörper wird somit erstmals ein Bremsklotz bzw. ein Scheibenbremsbelag angegeben, der sich durch ein hervorragendes Tragbild auszeichnet, da sich die Belagfläche an die unebene Reibfläche von Bremsscheibe bzw. Radumlauf anpaßt. Des weiteren sind die vorgestellten Bremsscheiben bzw. Bremsklötze aufgrund der elastischen Lagerung und Reibung der Reibwerkstoffelemente geräuschdämpfend.

Die erfindungsgemäße Ausführungsform eines Bremsenkorpers ermöglicht des weiteren die Verwendung harter verschleißfester Reibwerkstoffe bei gutem Tragbild. Gegenüber freistehend gefederten Bremsenkorpern hat die erfindungsgemäße Ausgestaltung den Vorteil, daß sich die in den Tragkörper eingelassenen Reibwerkstoffelemente an den Ausnehmungen abstützen. Dadurch werden Biegedeformationen infolge tangentialer Reibkräfte verhindert. Außerdem erfolgt der Verschleiß fahrtrichtungsunabhängig eben. Als weiterer Vorteil der erfindungsgemäßen Bremsenkörper ist zu nennen. daß Hot-Spots und Riffelbildung vermieden werden.

Darüberhinaus ist der erfindungsgemäße Bremsklotz kostengünstig in der Herstellung. So kann der Tragkörper gepreßt werden, und die Reibwerkstoffelemente sind. insbesondere wenn es sich um kreiszylindrische Elemente handelt, aus gepreßten Stangen herstellbar.

Die konventionelle Anbindung der erfindungsgemäßen Bremsbeläge beispielsweise mit Schwalbenschwanzführungen ermöglicht eine leichte Tauschbarkeit mit bislang eingesetzten UIC-Bauteilen.

### Bezugszeichenliste

- 1: Reibfläche gesamt
- 3: Bremsenkörper
- 5: Reibfläche Tragkörper
- 7: Tragkörper
- 9: Reibwerkstoffelemente
- 11: Ausnehmungen
- 13: elastisches Element
- 15: Befestigungsmittel
- 17: Befestigungsvorrichtung
- 19: Anbindungsvorrichtung
- 21: Vertiefung
- 23: Tellerfeder
- 25: Federn
- 26: Hülse
- 27: Reibwerkstoffelemente
- 29: Rad
- 30: erster Abschnitt
- 31: Beulen
- 32: zweiter Abschnitt
- 33.: Lauffläche
- 34: Trennbereich
- 40.1: Reibwerkstoffblock
- 40.2: Reibwerkstoffblock
- 40.3: Reibwerkstoffblock
- 42.1: elastisches Element
- 42.2: elastisches Element
- 42.3: elastisches Element
- 42.4: elastisches Element
- 44: Ausnehmungen
- 46: Gummimatte
- 48: Bleche
- 49: Schlitze
- 50: Reibwerkstoffelemente
- 52: Blechträger
- 60: Längsachse
- 62: Ausnehmung
- 64: Wippelement
- 66: übergeordnetes Wippelement
- 68: Reibwerkstoffelement
- 70: Schlitz
- 90: Scheibenbelag
- 100: Tragkörper
- 102: Ausnehmungen
- 104: Reibwerkstoffelement
- 106: Hülse
- 108: Plättchen
- 110: Federelement
- 112: Schwalbenschwanzführung
- F_{K}: Zuspannkraft
- F_{K'}: Zuspannkraft
- F_{K"}: Zuspannkraft
- F_{Z}: von Reibwerkstoffelementen aufgenommene Kräfte

## Patentansprüche

1. Bremsenkörper, der als Bremsklotz oder Scheibenbremsbelag ausgeführt ist, umfassend
1.1 einen Tragkörper (7) mit mehreren Ausnehmungen (11, 44, 62, 102),
1.2 in den Ausnehmungen angeordnete Reibwerkstoffelemente (9, 27, 50, 68 104), wobei
1.3 die Reibwerkstoffelemente (9, 27, 50, 68, 104) in Richtung längs der Ausnehmungen (11, 44, 62, 102) beweglich gelagert sind, wobei die Lagerung elastisch oder wippend in Richtung der Ausnehmungen ausgeführt ist, **dadurch gekennzeichnet, daß**
1.4 die Reibwerkstoffelemente (9, 27, 50, 68, 104) zusammen mit dem Tragkörper (7) eine Reibfläche (1) ausbilden.

2. Bremsenkörper gemäß Anspruch 1, **dadurch gekennzeichnet, daß** die Ausnehmungen mit den Reibwerkstoffelementen (9, 27, 50, 68, 104) in Reihe angeordnet sind.

3. Bremsenkörper gemäß Anspruch 1, **dadurch gekennzeichnet, daß** die Ausnehmungen mit den Reibwerkstoffelementen (9, 27, 50, 68, 104) versetzt angeordnet sind.

4. Bremsenkörper gemäß einem der Ansprüche 1 bis 3, **dadurch gekennzeichnet, daß**
der Anteil der Reibfläche der Reibwerkstoffelemente (9, 27, 50, 68, 104) an der gesamten Reibfläche (1) des Bremsenkörpers mindestens 30 %, vorzugsweise 50 bis 80 % beträgt.

5. Bremsenkörper gemäß einem der Ansprüche 1 bis 4, **dadurch gekennzeichnet, daß**
die elastische Lagerung der Reibwerkstoffelemente (9, 27, 50, 68, 104) elastische Elemente (13) umfaßt.

6. Bremsenkörper gemäß Anspruch 5. **dadurch gekennzeichnet, daß** die elastischen Elemente (13) Federelemente (25) umfassen.

7. Bremsenkörper gemäß Anspruch 6, **dadurch gekennzeichnet, daß** die Federelemente (25) Tellerfedern, Spiralfedern, Gummiringe oder Gummiplättchen sind.

8. Bremsenkörper gemäß einem der Ansprüche 1 bis 4, **dadurch gekennzeichnet, daß**
die wippend ausgeführte Lagerung der Reibwerkstoffefemente (9, 27, 50, 68, 104) Wippelemente (64) umfaßt, die eine Bewegung der Reibwerkstoffelemente (9, 27, 50, 68, 104) in Richtung der Ausnehmungslängsachse aufgrund von Kippbewegungen des Wippelementes (64) ermöglicht.

9. Bremsenkörper gemäß Anspruch 8, **dadurch gekennzeichnet, daß** mehrere Wippelemente (64) übereinander angeordnet sind, wobei die übereinander angeordneten Wippelemente (64) aneinander ankoppeln und ein übergeordnetes Wippelement ausbilden.

10. Bremsenkörper gemäß einem der Ansprüche 1 bis 9. **dadurch gekennzeichnet, daß**
in den Ausnehmungen (11, 44, 102) zwischen Aufnahmewand und Reibwerkstoffelementen (9. 27, 50. 68, 104) Mittel zur Reibungsverminderung vorgesehen sind.

11. Bremsenkörper gemäß Anspruch 10. **dadurch gekennzeichnet, daß** die Mittel zur Reibungsverminderung Hülsen (26. 28. 106) sind.

12. Bremsenkörper gemäß einem der Ansprüche 1 bis 11, **dadurch gekennzeichnet. daß**
der Tragkörper (100) aus weicherem und verschleißfreudigerem Material als die Reibwerkstoffelemente (9. 27. 50. 68. 104) besteht.

13. Bremsenkörper gemäß einem der Ansprüche 1 bis 12, **dadurch gekennzeichnet, daß**
die Reibwerkstoffelemente (9, 27, 50, 68. 104) aus einem harten, verschleißfesten Reibwerkstoff mit hohem E-Modul bestehen.

14. Bremsenkörper gemäß einem der Ansprüche 1 bis 13, **dadurch gekennzeichnet. daß**
der Reibwerkstoff ein Sinterwerkstoff ist.

15. Bremsenkörper gemäß einem der Ansprüche 1 bis 14, **dadurch gekennzeichnet, daß**
die in einer Ausnehmung (11, 44, 102) befindlichen Reibwerkstoffelemente (9, 27, 50, 68, 104) zu einem Reibwerkstoffblock (40.1, 40.2., 40.3) zusammengefaßt sind.

16. Bremsenkörper gemäß einem der Ansprüche 1 bis 15. **dadurch gekennzeichnet. daß**
die einzelnen Reibwerkstoffelemente (9. 27. 50. 68. 104) eine kreiszylindrische Form aufweisen.

17. Bremsenkörper gemäß einem der Ansprüche 1 bis 15. **dadurch gekennzeichnet, daß**
die einzelnen Reibwerkstoffelemente (9, 27, 50. 68. 104) eine von der kreiszylindrischen Form abweichende Form. vorzugsweise eine polygone oder elliptische Form aufweisen.

18. Bremsenkörper gemäß einem der Ansprüche 5 bis 17, **dadurch gekennzeichnet, daß**
zur beweglichen Lagerung flächig ausgedehnte. elastische Matten (46) als elastische Elemente (13) ausgeführt sind.

## Claims

1. A brake body which is designed as a disc brake shoe and lining assembly or disk brake pad, comprising
1.1 a brake plate (7) with several recesses (11, 44, 62, 102),
1.2 frictional material elements (9, 27, 50, 68, 104) positioned in the recesses,
1.3 the frictional material elements (9, 27, 50, 68, 104) being mounted such that they are able to move along the recesses (11, 44, 62, 102), the mounts being of elastic or rocker design,
**characterised in that**
1.4 the frictional material elements (9, 27, 50, 68, 104) form a frictional surface (1) together with the brake plate (7).

2. A brake body in accordance with claim 1,
**characterised in that**
the recesses with the frictional material elements (9, 27, 50, 68, 104) are positioned in a row.

3. A brake body in accordance with claim 1,
**characterised in that**
the recesses with the frictional material elements (9, 27, 50, 68, 104) are positioned offset.

4. A brake body in accordance with one of claims 1 to 3,
**characterised in that**
the frictional surface of the frictional material elements (9, 27, 50, 68, 104) represents at least 30% and preferably 50% to 80% of the total frictional surface (1) of the brake body.

5. A brake body in accordance with one of claims 1 to 4,
**characterised in that**
the elastic mount of the frictional material elements (9, 27, 50, 68, 104) comprises elastic elements (13).

6. A brake body in accordance with claim 5,
**characterised in that**
the elastic elements (13) comprise spring elements (25).

7. A brake body in accordance with claim 6,
**characterised in that**
the spring elements (25) are cup springs, flat coil springs, rubber washers or rubber discs.

8. A brake body in accordance with one of claims 1 to 4,
**characterised in that**
the rocker-type mount of the frictional material elements (9, 27, 50, 68, 104) comprises rocker elements (64) which enable the frictional material elements (9, 27, 50, 68, 104) to move along the longitudinal axis of the recesses due to the tilting movements of the rocker element (64).

9. A brake body in accordance with claim 8,
**characterised in that**
several rocker elements (64) are positioned one above the other, the rocker elements (64) positioned one above the other joining together to form a higher-ranking rocker element.

10. A brake body in accordance with one of claims 1 to 9,
**characterised in that**
means for reducing friction are provided in the recesses (11, 44, 102) between the receiving wall and the frictional material elements (9, 27, 50, 68, 104).

11. A brake body in accordance with claim 10,
**characterised in that**
means for reducing friction are sleeves (26, 28, 106).

12. A brake body in accordance with one of claims 1 to 11,
**characterised in that**
the brake plate (100) consists of sorter and more easily wearing material than the frictional material elements (9, 27, 50, 68, 104).

13. A brake body in accordance with one of claims 1 to 12,
**characterised in that**
the frictional material elements (9, 27, 50, 68, 104) consist of a hard, wear-resistant frictional material with a high modulus of elasticity.

14. A brake body in accordance with one of claims 1 to 13,
**characterised in that**
the frictional material is a sintered material.

15. A brake body in accordance with one of claims 1 to 14,
**characterised in that**
the frictional material elements (9, 27, 50, 68, 104) located one a recess (11, 44, 102) are combined to form a frictional material block (40.1, 40.2, 40.3).

16. A brake body in accordance with one of claims 1 to 15,
**characterised in that**
the shape of the individual frictional material elements (9, 27, 50, 68, 104) is circular cylindrical.

17. A brake body in accordance with one of claims 1 to 15,
**characterised in that**
the shape of the individual frictional material elements (9, 27, 50, 68, 104) is not circular cylindrical, but preferably polygonal or elliptical.

18. A brake body in accordance with one of claims 5 to 17,
**characterised in that**
for movable mounting, flat, sheet-like elastic mats (46) are designed as elastic elements (13).

## Revendications

1. Corps de freinage réalisé sous forme de sabot de frein ou plaquette de frein à disque, comprenant
1.1 un corps porteur (7) à plusieurs évidements (11, 44, 62, 102),
1.2 des éléments en matériau de frottement (9, 27, 50, 68, 104) disposés dans lesdits évidements,
1.3 lesdits éléments en matériau de frottement (9, 27, 50, 68, 104) étant logés en une direction le long desdits évidements (11, 44, 62, 102) de façon mobile, ce logement étant réalisé sous forme élastique ou à bascule en direction vers lesdits évidements,
caractérisé en ce
1.4 que lesdits éléments en matériau de frottement (9, 27, 50, 68, 104) coopèrent avec ledit corps porteur (7) de façon à former une aire de frottement (1).

2. Corps de freinage selon la revendication 1, **caractérisé en ce**
**que** lesdits évidements sont disposés en série avec lesdits éléments en matériau de frottement (9, 27, 50, 68, 104).

3. Corps de freinage selon la revendication 1, **caractérisé en ce que** lesdits évidements sont disposés en déport relativement auxdits éléments en matériau de frottement (9, 27, 50, 68, 104).

4. Corps de freinage selon une quelconque des revendications 1 à 3,
**caractérisé en ce**
**que** la fraction de l'aire de frottement desdits éléments en matériau de frottement (9, 27, 50, 68, 104) au total de l'aire de frottement (1) du corps de freinage correspond à au moins 30 %, de préférence 50 à 80 %.

5. Corps de freinage selon une quelconque des revendications 1 à 4,
**caractérisé en ce**
**que** le logement élastique desdits éléments en matériau de frottement (9, 27, 50, 68, 104) comprend des éléments élastiques (13).

6. Corps de freinage selon la revendication 5, **caractérisé en ce**
**que** lesdits éléments élastiques (13) comprennent des éléments à ressort (25).

7. Corps de freinage selon la revendication 6, **caractérisé en ce**
**que** lesdits éléments à ressort (25) sont des ressorts à disque, des ressorts spirals, des rondelles en caoutchouc ou des plaquettes en caoutchouc.

8. Corps de freinage selon une quelconque des revendications 1 à 4,
**caractérisé en ce**
**que** le logement sous forme à bascule desdits éléments en matériau de frottement (9, 27, 50, 68, 104) comprend des éléments de bascule (64); qui permet un mouvement desdits éléments en matériau de frottement (9, 27, 50, 68, 104) en un sens vers l'axe longitudinal dudit évidemment en vertu des mouvements à bascule dudit élément de bascule (64).

9. Corps de freinage selon la revendication 8, **caractérisé en ce**
**qu'**une pluralité des éléments de bascule (64) est disposée l'un sur l'autre, les éléments de bascule en superposés (64) étant couplés l'un à l'autre et constituant un élément de bascule prioritaire.

10. Corps de freinage selon une quelconque des revendications 1 à 9,
**caractérisé en ce**
**que** des moyens à réduire le frottement sont disposés dans des évidements (11, 44, 102) entre une paroi de réception et desdits éléments en matériau de frottement (9, 27, 50, 68, 104).

11. Corps de freinage selon la revendication 10, **caractérisé en ce**
**que** lesdits moyens à réduire le frottement sont des douilles (26, 28, 106).

12. Corps de freinage selon une quelconque des revendications 1 à 11,
**caractérisé en ce**
**que** ledit corps porteur (100) consiste en un matériau plus mou et plus incliné à s'user que lesdits éléments en matériau de frottement (9, 27, 50, 68, 104).

13. Corps de freinage selon une quelconque des revendications 1 à 12,
**caractérisé en ce**
**que** lesdits éléments en matériau de frottement (9, 27, 50, 68, 104) consistent en un matériau de frottement dur et résistant à l'usure à un grand module d'élasticité.

14. Corps de freinage selon une quelconque des revendications 1 à 13,
**caractérisé en ce**
**que** le matériau de frottement est un matériau fritté.

15. Corps de freinage selon une quelconque des revendications 1 à 14,
**caractérisé en ce**
**que** lesdits éléments en matériau de frottement (9, 27, 50, 68, 104) disposés dans un évidemment (11, 44, 102) sont combinés de façon à former un bloc en matériau de frottement (40.1, 40.2, 40.3).

16. Corps de freinage selon une quelconque des revendications 1 à 15,
**caractérisé en ce**
**que** lesdits éléments individuels en matériau de frottement (9, 27, 50, 68, 104) ont une forme de cylindre circulaire.

17. Corps de freinage selon une quelconque des revendications 1 à 15,
**caractérisé en ce**
**que** lesdits éléments individuels en matériau de frottement (9, 27, 50, 68, 104) ont une forme variant de la forme en cylindre circulaire, de préférence une forme polygone ou elliptique.

18. Corps de freinage selon une quelconque des revendications 5 à 17,
**caractérisé en ce**
**que** des mats élastiques à étendue plane (46) pour le logement mobile sont réalisés en tant que des éléments élastiques (13).
